# EUROPÄISCHE PATENTSCHRIFT

(11) **EP 0 301 202 B1**
(45) Veröffentlichungstag und Bekanntmachung des Hinweises auf die Patenterteilung: **28.07.1993**
(21) Anmeldenummer: 88108761.3
(22) Anmeldetag: 01.06.1988
(51) Int. Cl.: F16K 31/365

(54) **Ventileinrichtung für Druckmittel**
Valve device for fluids under pressure
Dispositif de soupape pour fluide sous pression

(30) Priorität: 28.07.1987 DE 3724894
(43) Veröffentlichungstag der Anmeldung: 01.02.1989
(73) Patentinhaber: WABCO Vermögensverwaltungs-GmbH, D-30432 Hannover (DE)
(72) Erfinder: Bornhof, Hans-Ulrich, Ing. grad., D-3006 Burgwedel 1 (DE); Frania, Josef, D-3000 Hannover (DE)
(74) Vertreter: Schrödter, Manfred, Dipl.-Ing.

(56) Entgegenhaltungen:
- CH-A- 86 072
- DE-A- 2 821 136
- DE-A- 3 434 884
- DE-C- 67 179
- DE-C- 600 738
- US-A- 3 971 409

## Beschreibung

Die Erfindung betrifft eine Ventileinrichtung für Druckmittel gemäß dem Oberbegriff des Patentanspruchs 1.

Derartige Ventileinrichtungen sind in der Druckmitteltechnik weit verbreitet. Die Membran dient zum Trennen von das Druckmittel enthaltenden Kammern mit unterschiedlichen Druckniveaus innerhalb der Ventileinrichtung oder zum Trennen von einer oder mehreren das Druckmittel enthaltenden Kammern der Ventileinrichtung gegenüber der Umgebung. Die Membran ist dabei auf einer gehäuseseitig nicht abgestützten Fläche, nachstehend Wirkfläche, von wenigstens einem Druck des Druckmittels beaufschlagt. Zusätzlich kann die Wirkfläche von weiteren Kräften, die ebenfalls von wenigstens einem Druck des Druckmittels stammen können, beaufschlagt sein. Der wenigstens eine Druck auf der Wirkfläche erzeugt eine Druckkraft, deren Größe von der Größe der Wirkfläche abhängt. Als Betriebsparameter, welche die Membran durch die Größe der Wirkfläche bestimmt oder mitbestimmt, kommen insbesondere der Öffnungshub, der Öffnungsquerschnitt, die Durchflußmenge, der Öffnungsdruck, der Schließdruck, der Höchstdruck, der Mindestdruck, jeweils für sich oder in Verbindung mit wenigstens einem anderen, in Betracht; der bzw. die Betriebsparameter können sich auf die Ventileinrichtung oder das Druckmittel (-system) oder auf beide beziehen. Zur Erzielung der Wirkung der Membran wird diese in der Regel mit einer Gegenkraft zu der auf der Wirkfläche erzeugten Druckkraft bzw. zu den weiteren Kräften beaufschlagt. Diese Gegenkraft kann von der Membran selbst aus den Eigenspannungen, denen sie infolge der Druckbeaufschlagung der Wirkfläche bzw. infolge der weiteren Kräfte auf der Wirkfläche ausgesetzt ist, erzeugt werden; die Gegenkraft kann aber auch ganz oder teilweise durch eine membranfremde Kraftquelle, z.B. eine Steuerfeder, erzeugt werden.

Eine Ventileinrichtung der eingangs genannten Art ist aus der DE-A-34 34 884, dort Überströmventil II des in Fig. 5 dargestellten Mehrkreisschutzventils, bekannt. Diese Ventileinrichtung weist eine Membran auf, die mit einer Wirkfläche von dem Druck des am Ausgang (dort 62) austretenden Druckmittels beaufschlagt ist. Die Membran ist zwischen dem Gehäuse und einem kuppelförmigen Gehäusedeckel eingespannt. Radial innerhalb der Einspannstelle ist die Membran durch den Rand eines Hohlraums im Gehäusedeckel, nachstehend Stützrand, gehäuseseitig abgestützt. Die von dem genannten Stützrand eingefaßte, von dem Druck des austretenden Druckmittels beaufschlagte Fläche der Membran ist die gehäuseseitig nicht abgestützte Wirkfläche. Die Größe der Wirkfläche ist durch die Abmessungen des Stützrandes, also durch die Abmessungen der gehäuseseitigen Abstützung festgelegt. Durch ihre Größe bestimmt die Wirkfläche als Betriebsparameter den Druck des austretenden Druckmittels, bei dem die Ventileinrichtung schließt, also ihren Schließdruck. Da nach dem Öffnen der Ventileinrichtung bis zu ihrem Schließen die Drücke des eintretenden und des austretenden Druckmittels gleich sind, legt die Ventileinrichtung mit diesem Schließdruck zugleich den Mindestdruck des Druckmittels auf der Eintrittsseite fest, der, Intaktheit des Systems auf der Eintrittsseite vorausgesetzt, nicht unterschritten werden kann.

Soll bei der bekannten Ventileinrichtung zur Veränderung des Betriebsparameters die Größe der Wirkfläche der Membran verändert werden, so geschieht dies durch einen Austausch des Gehäusedeckels gegen einen solchen mit passendem Stützrand. Das bedeutet, daß für jeden Betriebsparameter ein eigener Gehäusedeckel vorgesehen werden muß. Die dadurch bedingte Vielfalt an Gehäusedeckeln führt zu einem erheblichen Fertigungsaufwand.

Aus der DE-C-600 738 ist eine Ventileinrichtung für Druckmittel mit einer Membran bekannt, deren Membran auf beiden Seiten von den Drücken eines Druckmittels beaufschlagt ist und deshalb auf beiden Seiten je eine Wirkfläche hat, insgesamt also zwei Wirkflächen aufweist. Die erwähnten Drücke des Druckmittels sind im Normalbetrieb unterschiedlich; in einem Notfall gleicht sich der eine Druck dem anderen Druck an. Jede Wirkfläche ist von einem gehäuseseitigen Stützrand eingefaßt. Die Membran ist zwischen einem Gehäuseteil und einem in dieses eingeschraubten Gehäuseeinsatz eingespannt, wodurch der eine Stützrand von dem Gehäuseeinsatz gebildet wird.

Der Erfindung liegt die Aufgabe zugrunde, eine Ventileinrichtung der eingangs genannten Art mit einfachen Mitteln derart zu verbessern, daß sie mit verringertem Fertigungsaufwand an verschiedene Betriebsparameter angepaßt werden kann.

Diese Aufgabe wird durch die in dem Patentanspruch 1 angegebene Erfindung gelöst. Weiterbildungen und vorteilhafte Ausgestaltungen sind in den Unteransprüchen angegeben.

Die Erfindung ermöglicht, mit einem oder wenigen Gehäusedeckeln auszukommen und die spezielle Anpassung an den jeweiligen Einsatzfall mittels wenigstens eines angepaßten Gehäuseeinsatzes vorzunehmen. Die Erfindung ermöglicht damit eine erhebliche Verringerung der Lagerhaltung an Gehäusedeckel-Bauarten und damit eine bedeutende Verringerung von Platzbedarf und Kapitalbindung.

Die Erfindung eignet sich für alle Bauarten von Ventileinrichtungen mit den gattungsbildenden Merkmalen. Sie eignet sich insbesondere für eine Ventileinrichtung, die ein Ventil aufweist, dessen druckabhängiges Öffnen und Schließen durch Hub bzw. Rückstellung der Membran bewirkt wird, wobei der Betriebsparameter der Öffnungsdruck und/oder der Schließdruck des Ventils ist.

Weitere Vorteile und Ausgestaltungen der Erfindung ergeben sich aus den nachstehenden Erläuterungen anhand von in Zeichnungen dargestellten Ausführungsbeispielen.

Unter Verwendung durchgehend gleicher Bezugszeichen für Bauteile mit gleichen Funktionen zeigen
- **Fig. 1**: ein Überström- oder Druckbegrenzungsventil,
- **Fig. 2**: ein anderes Überström- oder Druckbegrenzungsventil.

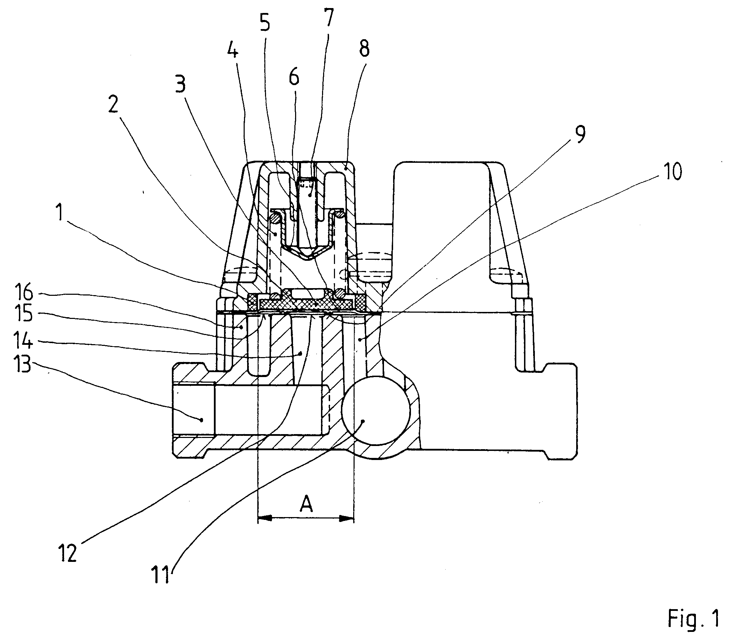

Fig. 1 zeigt beispielhaft für eine Ventileinrichtung für Druckmittel ein Überströmventil, welches in nicht näher beschriebener Weise Bestandteil eines Mehrkreisschutzventils ist.

Das Überströmventil weist eine Membran (2) auf, die zwischen dem Gehäuse (16) und einem Gehäusedeckel (8) eingespannt ist.

In der Mantelfläche seines hohlen Innenraums weist der Gehäusedeckel (8) eine Aufnahme auf, in die ein Gehäuseeinsatz (1) lose eingesetzt jedoch axial festgelegt, oder eingepreßt ist.

Im Gehäuse (16) sind eine mit einem ersten Druckmittelanschluß (11) verbundene erste Kammer (10) und eine mit einem zweiten Druckmittelanschluß (13) verbundene zweite Kammer (14) vorgesehen. Die Membran (2) ist diesen Kammern (10) und (14) mit einer Wirkfläche (12, 15) zugewandt, die deshalb von den in den Kammern (10) und (14) herrschenden Drücken des Druckmittels beaufschlagt ist.

Der Gehäuseeinsatz (1) steht wenigstens, wenn die Membran (2) durch Druck verformt ist, mit der ihm zugewandten Fläche (6) der Membran (2) in Berührung und stützt dadurch die von ihm abgewandte Fläche der Membran (2) ab. Dabei umschließt der Gehäuseeinsatz (1) auf der ihm abgewandten Fläche der Membran (2) eine gehäuseseitig nicht abgestützte Fläche, die die Wirkfläche (12, 15) bildet. Die Größe der Wirkfläche (12, 15) wird im wesentlichen von der lichten Weite (A) des Gehäuseeinsatzes (1) bestimmt. Der Einfluß, den eine besondere Übergangszone zwischen Stirnfläche und lichter Weite (A) des Gehäuseeinsatzes (1), die zur Schonung der Membran (2) vorgesehen ist, auf die Größe der Wirkfläche (12, 15) hat, ist bei dieser Aussage vernachlässigt.

In dem Gehäuse (16) ist ein gehäusefester Ventilsitz (9) angeordnet, der mit der Wirkfläche (12, 15) ein Ventil (9, 12, 15) bildet, welches im geschlossenen Zustand die Kammern (10) und (14) voneinander trennt. Zur Bildung dieses Ventils sind die Membran (2) und der gehäusefeste Ventilsitz (9) in nicht näher dargestellter Weise mit geeigneten Ventilflächen bzw. Ventilsitzen versehen. Bei geschlossenem Ventil (9, 12, 15) teilt der Ventilsitz (9) die Wirkfläche (12, 15) der Membran (2) in eine der ersten Kammer (10) zugeordnete erste Teilwirkfläche (15) und eine der zweiten Kammer (14) zugeordnete zweite Teilwirkfläche (12) auf. Die erste Teilwirkfläche (15) umgibt die zweite Teilwirkfläche (12), so daß der Gehäuseeinsatz (1) die Wirkfläche (12, 15) über die erste Teilwirkfläche (15) abstützt.

Auf ihrer dem Gehäuseeinsatz (1) zugewandten Fläche (6) ist die Membran (2) unter Zwischenschaltung eines Federtellers (3) durch eine Steuerfeder (4) beaufschlagt, welche sich über einen zweiten Federteller (5) und eine Einstellschraube (7) am Gehäusedeckel (8) abstützt.

Für die folgende Funktionsbeschreibung sei angenommen, daß das Druckmittel am ersten Anschluß (11) eintrete und am zweiten Anschluß (13) austrete. Die erste Kammer (10) und damit die erste Teilwirkfläche (15) seien also mit dem Druck des eintretenden Druckmittels, nachstehend Eintrittsdruck, die zweite Kammer (14) und damit die zweite Teilwirkfläche (12) seien also mit dem Druck des austretenden Druckmittels, nachstehend Austrittsdruck, beaufschlagt.

Das Ventil (9, 12, 15) bleibt so lange geschlossen und verhindert damit eine Druckmittelströmung vom ersten Anschluß (11) zum zweiten Anschluß (13), bis die Drücke auf den Teilwirkflächen die Kraft der Steuerfeder (4) überwinden. Der Eingangsdruck, bei dem das Ventil (9, 12, 15) öffnet, ist der Öffnungsdruck. Dieser hängt von der Kraft der Steuerfeder (4), dem Eingangsdruck und dem Ausgangsdruck und den Größen der Teilwirkflächen (12) und (15) ab und wird demzufolge bei gegebener Größe der zweiten Teilwirkfläche (12) als Betriebsparameter der Ventileinrichtung von der Größe der ersten Teilwirkfläche (15) und damit von der Größe der Wirkfläche (12, 15) mitbestimmt.

Nun sei angenommen, das Ventil (9, 12, 15) sei geöffnet. Dann sind der Eintrittsdruck und der Austrittsdruck gleich; es herrscht im Druckmittel also nur ein Druck, der die ganze Wirkfläche (12, 15) beaufschlagt. Dieser Druck kann, beispielsweise durch Druckmittelverbrauch oder durch einen Defekt im System stromabwärts des zweiten Anschlusses (13), abfallen. Dieser Druckabfall bleibt hinsichtlich der Öffnung des Ventils (9, 12, 15) solange im wesentlichen wirkungslos wie nicht die Kraft der Steuerfeder (4) die auf der Wirkfläche (12, 15) lastende Druckkraft überwindet. Der Druck, bei dem die Kraft der Steuerfeder (4) diese Druckkraft überwindet und dadurch das Ventil (9, 12, 15) schließt, ist der Schließdruck. Da der abfallende Druck stets die gesamte Wirkfläche (12, 15) beaufschlagt, der Eingangsdruck bei geschlossenem Ventil (9, 12, 15) hingegen nur die erste Teilwirkfläche (15) beaufschlagt, ist der Schließdruck in der Regel niedriger als der Öffnungsdruck.

Der Schließdruck wird von der Kraft der Steuerfeder (4) und der Größe der Wirkfläche (12, 15) bestimmt; er wird also als Betriebsparameter der Ventileinrichtung von der Größe der Wirkfläche (12, 15) mitbestimmt. Der Schließdruck ist zugleich der Eintrittsdruck, der intaktes Druckmittelsystem stromaufwärts des ersten Anschlusses (11) vorausgesetzt, als dessen Mindestdruck nicht unterschritten werden kann, und damit zugleich ein Betriebsparameter des Druckmittels.

Die Strömungsrichtung des Druckmittels kann auch umgekehrt werden; es können also am zweiten Anschluß (13) der Eintrittsdruck und am ersten Anschluß (11) der Ausgangsdruck anstehen. Dadurch ändert sich vor dem Öffnen des Ventils (9, 12, 15) die Zuordnung von Drücken und Teilwirkflächen (12) bzw. (15). Eine Auswirkung auf die Funktion des Überströmventils und die beschriebenen Abhängigkeiten der Betriebsparameter hat dies aber nicht.

Sollen die Betriebsparameter "Öffnungsdruck" und "Schließdruck" verändert werden, so kann dies durch Auswechseln des Gehäuseeinsatzes (1) geschehen. Es braucht zu diesem Zweck nur ein Gehäuseeinsatz (1) mit einer an die neue Zielsetzung angepaßten lichten Weite (A) eingesetzt zu werden. Je nach Zielsetzung wäre es auch möglich, den vorhandenen Gehäuseeinsatz (1) zu belassen und in nicht näher dargestellter Weise einen zweiten Gehäuseeinsatz mit angepaßter lichter Weite (A) zusätzlich einzusetzen.

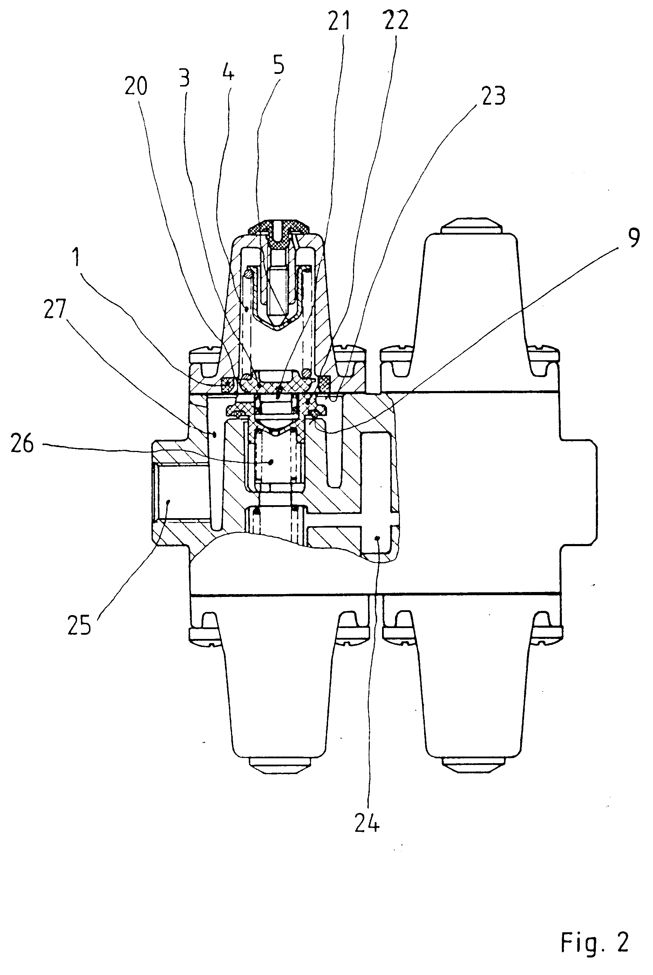

Fig. 2 zeigt als weiteres Beispiel für eine Ventileinrichtung für Druckmittel ein Überströmventil, welches ebenfalls in nicht näher beschriebener Weise Bestandteil eines Mehrkreisschutzventils ist.

Bei diesem Ausführungsbeispiel ist die Wirkfläche (23) der Membran (20) einer zweiten Kammer (27) zugewandt, die mit einem zweiten Anschluß (25) verbunden ist. Eine erste Kammer (26) ist mit einem ersten Anschluß (24) verbunden. Ein Ventil (9, 22) kontrolliert die Verbindung zwischen den genannten Kammern (26) und (27). Das Ventil (9, 22) wird von dem gehäusefesten Ventilsitz (9) und einem zwischen diesem und der Wirkfläche (23) der Membran (20) in der zweiten Kammer (27) angeordneten Zwischenglied (22) gebildet. Das Zwischenglied (22) weist zwecks Bildung des Ventils (9, 22) einen nicht näher bezeichneten Ventilsitz auf. Dieser definiert am Zwischenglied (22) eine mit dem Druck des Druckmittels in der ersten Kammer (26) beaufschlagte Fläche. Das Zwischenglied (22) bildet also mittels der genannten Fläche aus dem Druck in der ersten Kammer (26) eine Druckkraft, die es an die Wirkfläche (23) der Membran (20) weiterleitet.

Zur Sicherstellung der Funktion dieses Überströmventils unter bestimmten ungünstigen Einsatzbedingungen ist im Zwischenglied (22) ein generell mit (21) bezeichnetes Drosselrückschlagventil angeordnet, auf welches hier aber nicht eingegangen zu werden braucht. Soweit vorstehend nicht anderes gesagt ist, entspricht dieses Ausführungsbeispiel in seinem Aufbau dem vorigen Ausführungsbeispiel.

Das Druckmittel trete am ersten Anschluß (24) ein und am zweiten Anschluß (25) aus. Die Wirkfläche (23) der Membran (20) sei also über die zweite Kammer (27) mit dem Ausgangsdruck und über das Zwischenglied (22) mit einer vom Eintrittsdruck hervorgerufenen Druckkraft beaufschlagt. Die letztgenannte Druckkraft ist eine Resultierende aus den an dem Zwischenglied (22) hervorgerufenen Kräften des Eingangsdrucks und des Ausgangsdrucks.

Das Ventil (9, 22) öffnet sich, wenn die Kraft der Steuerfeder (4) von der Summe aus Druckkraft am Zwischenglied (22) und vom Ausgangsdruck auf der Wirkfläche (23) hervorgerufener Kraft überwunden wird. Der Öffnungsdruck als Betriebsparameter der Ventileinrichtung wird also von der Größe der genannten Fläche des Zwischenglieds (22) und, wie beim vorigen Ausführungsbeispiel, von der Höhe des Ausgangsdrucks und des Eingangsdrucks sowie von der Größe der Wirkfläche (23) bestimmt, von letzterer also mitbestimmt.

Bei geöffnetem Ventil (9, 22) ist das Zwischenglied (22) völlig druckausgeglichen, so daß die beim vorigen Ausführungsbeispiel für das Schließen und den Schließdruck gemachten Ausführungen für dieses Ausführungsbeispiel mitgelten.

Auch beim vorliegenden Ausführungsbeispiel gelten die vorstehenden und zum vorigen Ausführungsbeispiel gemachten Ausführungen entsprechend, wenn die Strömungsrichtung, also die Zuordnung von Eingangsdruck, Ausgangsdruck und Kammern (26) und (27) vertauscht werden.

Stellt man sich bei beiden Ausführungsbeispielen vor, daß der jeweilige Ausgangsanschluß mit einem druckentlasteten Raum, beispielsweise der Atmosphäre verbunden ist, so stehen die Ausführungsbeispiele auch für Druckbegrenzungsventile oder Sicherheitsbzw. Überdruckventile.

Die in den Ausführungsbeispielen der Steuerfeder (4) und den zugeordneten Bauteilen Federteller (3) und (5) und Einstellschraube (7) übertragene Funktion kann auch von der Membran durch ihre Eigenspannungen unter der Einwirkung des Drucks bzw. der Drücke des Druckmittels erbracht werden. Unter Umständen muß die Membran in nicht dargestellter Weise zu diesem Zweck besonders ausgebildet sein.

## Patentansprüche

1. Ventileinrichtung für Druckmittel mit einer Membran (2; 20), welche durch die Größe einer von einem gehäuseseitigen Stützrand eingefaßten, von wenigstens einem Druck des Druckmittels beaufschlagten Fläche, nachstehend Wirkfläche (12, 15; 23), wenigstens einen Betriebsparameter der Ventileinrichtung und/oder des Druckmittels wenigstens mitbestimmt, wobei die der Wirkfläche (12, 15; 23) abgewandte Seite der Membran (2; 20) dem Atmosphären druck ausgesetzt ist, dadurch gekennzeichnet, daß zur Herstellung des Stützrandes in einem Gehäuseteil (Gehäusedeckel 8) auf der der Wirkfläche (12, 15; 23) abgewandten Seite der Membran (2; 20) wenigstens ein Gehäuseeinsatz (1) angeordnet ist, dessen lichte Weite (A) im wesentlichen die Größe der Wirkfläche (12, 15; 23) bestimmt.

2. Ventileinrichtung nach Anspruch 1, dadurch gekennzeichnet, daß die Ventileinrichtung ein Ventil (9, 12, 15; 9, 22) aufweist, dessen druckabhängiges Öffnen und Schließen durch Hub bzw. Rückstellung der Membran (2; 20) bewirkt wird, und daß der Betriebsparameter der Öffnungsdruck und/oder der Schließdruck des Ventils (9, 12, 15; 9, 22) ist.

3. Ventileinrichtung nach Anspruch 2, dadurch gekennzeichnet, daß die Wirkfläche (12, 15) der Membran (2) bei geschlossenem Ventil (9, 12, 15) in eine mit dem Druck des eintretenden Druckmittels beaufschlagte erste Teilwirkfläche (15) und eine mit dem Druck des austretenden Druckmittels beaufschlagte zweite Teilwirkfläche (12) aufgeteilt ist und daß die erste Teilwirkfläche (15) dem Gehäuseeinsatz (1) benachbart ist.

4. Ventileinrichtung nach Anspruch 2, dadurch gekennzeichnet, daß die Wirkfläche der Membran (12, 15) bei geschlossenem Ventil (9, 12, 15) in eine mit dem Druck des austretenden Druckmittels beaufschlagte erste Teilwirkfläche (15) und eine mit dem Druck des eintretenden Druckmittels beaufschlagte zweite Teilwirkfläche (12) aufgeteilt ist und daß die erste Teilwirkfläche (15) dem Gehäuseeinsatz (1) benachbart ist.

5. Ventileinrichtung nach einem der Ansprüche 3 oder 4, dadurch gekennzeichnet, daß das Ventil (9, 12, 15) von der Wirkfläche (12, 15) der Membran (2) und einem gehäusefesten Ventilsitz (9) gebildet wird, welch letzterer die Wirkfläche (12, 15) in die Teilwirkflächen (12) und (15) aufteilt.

6. Ventileinrichtung nach Anspruch 2, dadurch gekennzeichnet, daß die Wirkfläche (23) der Membran (20) mit dem Druck des austretenden Druckmittels und über ein Zwischenglied (22) mit einer vom Druck des eintretenden Druckmittels hervorgerufenen Druckkraft beaufschlagt ist.

7. Ventileinrichtung nach Anspruch 2, dadurch gekennzeichnet, daß die Wirkfläche (23) der Membran (20) mit dem Druck des eintretenden Druckmittels und über ein Zwischenglied (22) mit einer vom Druck des austretenden Druckmittels hervorgerufenen Druckkraft beaufschlagt ist.

8. Ventileinrichtung nach einem der Ansprüche 6 oder 7, dadurch gekennzeichnet, daß das Ventil (9, 22) von dem Zwischenglied (22) und einem gehäusefesten Ventilsitz (9) gebildet wird.

9. Ventileinrichtung nach einem der vorhergehenden Ansprüche, dadurch gekennzeichnet, daß die Membran (2; 20) auf ihrer der Wirkfläche (12, 15; 23) entgegengesetzten Fläche (6) durch eine Steuerfeder (4) beaufschlagt ist.

## Claims

1. A valve device for media under pressure with a diaphragm (2; 20), the size of a face of which that is gripped by a supporting edge in the housing and pressurized by at least one pressure of the pressure medium, hereinafter referred to as the active face (12, 15; 23) at least jointly determines at least one working parameter of the valve device and/or of the pressure medium, the side of the diaphragm (2; 20) facing away from the active face (12, 15; 23) being exposed to atmospheric pressure, characterized in that to produce the supporting edge in a housing part (housing cover 8) on the side of the diaphragm (2; 20) facing away from the active face (12, 15; 23) there is arranged at least one housing insert (1), the inside width (A) of which essentially determines the size of the active face (12, 15; 23).

2. A valve device according to claim 1, characterized in that the valve device comprises a valve (9, 12, 15; 9, 22), the pressure-dependent opening and closing of which is effected by deflection and return movement respectively of the diaphragm (2; 20), and the working parameter is the opening pressure and/or the closing pressure of the valve (9, 12, 15; 9, 22).

3. A valve device according to claim 2, characterized in that the active face (12, 15) of the diaphragm (2) with the valve (9, 12, 15) closed is divided into a first partial active face (15) pressurized with the pressure of the incoming pressure medium and a second partial active face (12) pressurized with the pressure of the outgoing pressure medium, and the first partial active face (15) is adjacent to the housing insert (1).

4. A valve device according to claim 2, characterized in that the active face of the diaphragm (12, 15) with the valve (9, 12, 15) closed is divided into a first partial active face (15) pressurized with the pressure of the outgoing pressure medium and a second partial active face (12) pressurized with the pressure of the incoming pressure medium, and the first partial active face (15) is adjacent to the housing insert (1).

5. A valve device according to one of claims 3 and 4, characterized in that the valve (9, 12, 15) is formed by the active face (12, 15) of the diaphragm (2) and a valve seat (9) fixed in the housing, the latter dividing the active face (12, 15) into the partial active faces (12) and (15).

6. A valve device according to claim 2, characterized in that the active face (23) of the diaphragm (20) is pressurized with the pressure of the outgoing pressure medium and by way of an intermediate member (22) is pressurized with a thrust derived from the pressure of the incoming pressure medium.

7. A valve device according to claim 2, characterized in that the active face (23) of the diaphragm (20) is pressurized with the pressure of the incoming pressure medium and by way of an intermediate member (22) is pressurized with a thrust derived from the pressure of the outgoing pressure medium.

8. A valve device according to one of claims 6 and 7, characterized in that the valve (9, 22) is formed by the intermediate member (22) and a valve seat (9) fixed in the housing.

9. A valve device according to one of the preceding claims, characterized in that the diaphragm (2; 20) is loaded on its face (6) opposing the active face (12, 15; 23) by a control spring (4).

## Revendications

1. Dispositif de soupape pour fluide de pression, comportant une membrane (2; 20) qui, par la grandeur d'une surface, dénommée surface active (12, 15; 23) par la suite, enserrée par un bord d'appui du carter et sollicitée par au moins une pression du fluide de pression, contribue tout au moins à la détermination d'au moins un paramètre de fonctionnement du dispositif de soupape et/ou du fluide de pression, le côté de la membrane (2; 20) opposé à la surface active (12, 15; 23) étant soumis à la pression atmosphérique, caractérisé en ce que pour la réalisation du bord d'appui dans une partie de carter (couvercle de carter 8), sur le côté de la membrane (2; 20) opposé à la surface active (12, 15; 23), est disposé au moins un insert de carter (1) dont le diamètre intérieur (A) détermine sensiblement la grandeur de la surface active (12, 15; 23).

2. Dispositif de soupape selon la revendication 1, caractérisé en ce que le dispositif de soupape comprend une soupape (9, 12, 15; 9, 22) dont l'ouverture et la fermeture en fonction de la pression sont produites respectivement par la levée et le retour de la membrane (2; 20), et en ce que le paramètre de fonctionnement est la pression d'ouverture et/ou la pression de fermeture de la soupape (9, 12, 15; 9, 22).

3. Dispositif de soupape selon la revendication 2, caractérisé en ce que la surface active (12, 15) de la membrane (2), lorsque la soupape (9, 12, 15) est fermée, est subdivisée en une première surface active partielle (15) sollicitée par la pression du fluide de pression qui rentre, et en une seconde surface active partielle (12) sollicitée par la pression du fluide de pression qui sort, et en ce que la première surface active partielle (15) est voisine de l'insert de carter (1).

4. Dispositif de soupape selon la revendication 2, caractérisé en ce que la surface active (12, 15) de la membrane, lorsque la soupape (9, 12, 15) est fermée, est subdivisée en une première surface active partielle (15) sollicitée par la pression du fluide de pression qui sort, et en une seconde surface active partielle (12) sollicitée par la pression du fluide de pression qui rentre, et en ce que la première surface active partielle (15) est voisine de l'insert de carter (1).

5. Dispositif de soupape selon l'une des revendications 3 ou 4, caractérisé en ce que la soupape (9, 12, 15) est formée par la surface active (12, 15) de la membrane (2) et un siège de soupape (9) solidaire du carter et subdivisant la surface active (12, 15) en les surfaces actives partielles (12) et (15).

6. Dispositif de soupape selon la revendication 2, caractérisé en ce que la surface active (23) de la membrane (20) est sollicitée par la pression du fluide de pression qui sort, et au moyen d'un organe intermédiaire (22), par une force de pression engendrée par la pression du fluide de pression qui rentre.

7. Dispositif de soupape selon la revendication 2, caractérisé en ce que la surface active (23) de la membrane (20) est sollicitée par la pression du fluide de pression qui rentre, et au moyen d'un organe intermédiaire (22), par une force de pression engendrée par la pression du fluide de pression qui sort.

8. Dispositif de soupape selon l'une des revendications 6 ou 7, caractérisé en ce que la soupape (9, 22) est formée par l'organe intermédiaire (22) et un siège de soupape (9) solidaire du carter.

9. Dispositif de soupape selon l'une des revendications précédentes, caractérisé en ce que la membrane (2; 20) est sollicitée par un ressort de commande (4) sur sa surface (6) opposée à la surface active (12, 15; 23).
